# EUROPEAN PATENT SPECIFICATION

(11) **EP 1 072 084 B1**
(45) Date of publication and mention of the grant of the patent: **17.03.2004**
(21) Application number: 99913011.5
(22) Date of filing: 08.04.1999
(51) Int. Cl.: H02K 21/18, H02K 1/06, H02K 1/14, H02K 37/16, H02K 21/24

(54) **IMPROVED ELECTRIC MOTOR**
VERBESSERTER ELEKTROMOTOR
MOTEUR ELECTRIQUE AMELIORE

(30) Priority: 16.04.1998 AU PP301098; 03.12.1998 AU PP750298
(43) Date of publication of application: 31.01.2001
(73) Proprietor: Ettridge, John Patrick, Dover Gardens, S.A. 5048 (AU)
(72) Inventor: Ettridge, John Patrick, Dover Gardens, S.A. 5048 (AU)
(74) Representative: KEIL & SCHAAFHAUSEN
(86) International application number: PCT/AU1999/000261
(87) International publication number: WO 1999/054990

(56) References cited:
- EP-A- 0 429 729
- EP-A- 0 590 185
- AU-A- 3 516 071
- DE-A- 2 632 013
- DE-A- 4 023 791
- DE-A- 4 042 432
- JP-A- 8 251 902
- US-A- 3 440 464
- US-A- 4 303 843
- US-A- 4 731 554
- US-A- 4 900 965
- US-A- 5 311 092
- US-A- 5 633 549

## Description

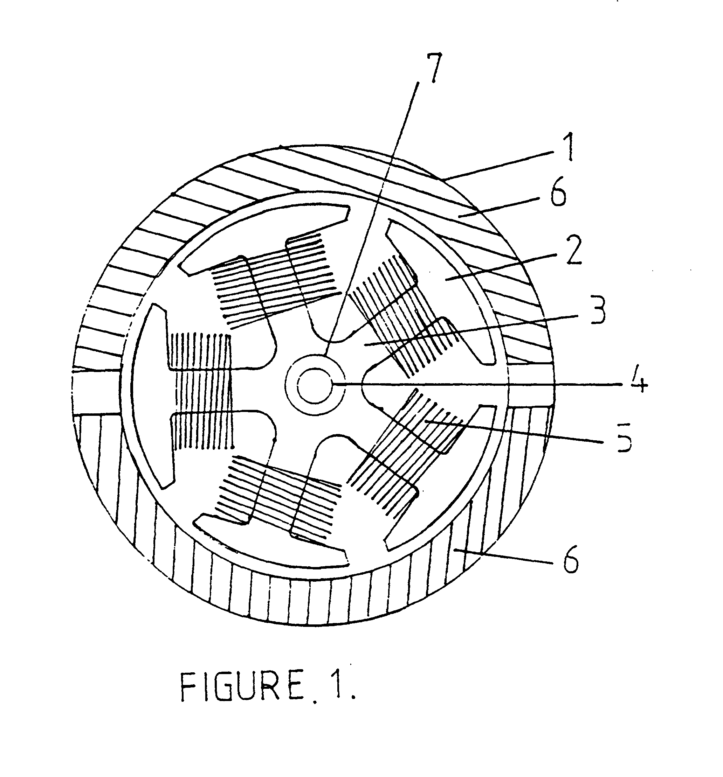

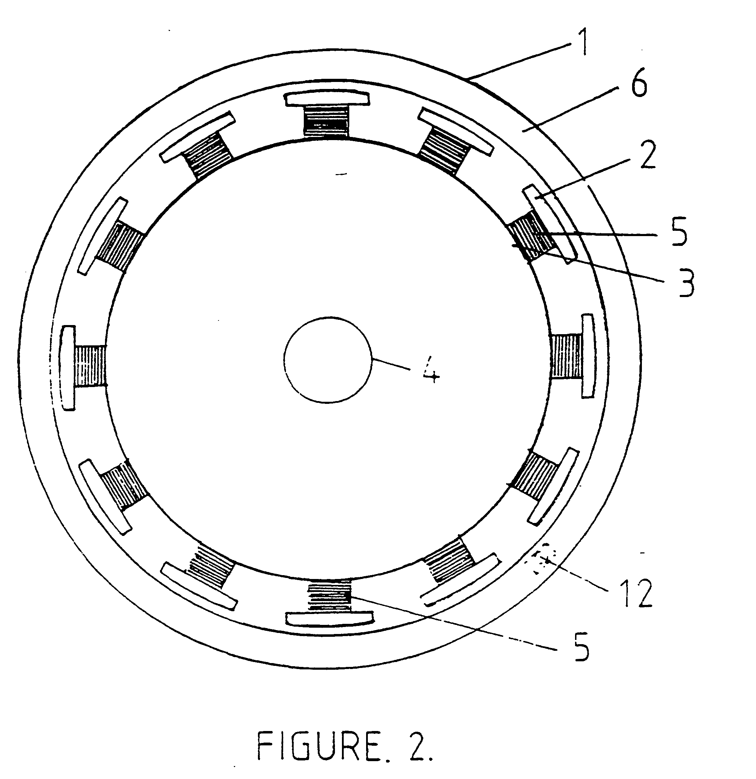

The accepted electric motor (fig. 1). (fig. 2), either C.C. or A.C. uses the magnetic principle of like magnetic poles repel, and unlike magnetic poles attract. This principle and the knowledge that by changing the direction of an electrical current through an energised coil, changes the magnetic poles of the metallic, ferrite, or phenolic core passing through the energised coil. This method is used to cause rotation, by the push and pull action of the rotor or stator, depending on the design requirements of the electric motor. All the current designs suffer from the same design fault, and only use one side of the energised core to produce rotation movement of the rotor or stator. While it is not inefficient to only use one side of a permanent magnet, it is very inefficient to only use one side of an energised core. Only half the potential of the electric motor is used.

The US 4,731,554 discloses a ring shaped d.c. or induction motor having a ring shaped stator means and ring shaped rotor means radially spaced from the stator means on both sides thereof. Permanent magnets of the rotor means are magnetically coupled to windings on the stator means. The laminated core of the stator means has a toroid form of ferrous material and around the core a plurality of windings are wound in a single layer in a helical manner.

The DE 40 42 432 A1 discloses a similar motor with two ring shaped rotors with permanent magnets and a ring shaped stator being disposed between the ring shaped rotors. The stator is build up by a meander-shaped electrical conductor, where the longitudinal side of the cross section of the conductor is disposed in parallel to the magnetic field between the permanent magnets of the rotors. With this specific meander shaped conductor a small rotor-stator-arrangement is achieved where eddy current losses are reduced in order to attain higher motor power.

DE 40 23 791 A1 discloses a stator disposed between two rotor elements, the stator having grooves in its inner and outer circumferential surface into which an annular winding is inserted. Accordingly, the winding is disposed at the inner and outer circumferential surface of the stator.

In the US 4,900,965 an I-shaped stator bar is surrounded be a rotor having permanent magnets. On the inner side of the stator magnetically permeable material is provided building a magnetic flux return path. Between the I-shaped stator bars electrical conductors are randomly dispersed. The I-shape of the stator bars provides increased surface area for cooling as well as flux shielding for the windings allowing higher current flow resulting in a higher power-to-weight ratio.

The EP 0 429 729 A1 discloses an electric machine with a disk-like armature. The armature consists of a winding formed on a soft iron core disk constituted by a strip of insulated dynamo sheet. The active portions of the armature winding extend radially over the faces or in slots in the faces.

The object of this invention is that the magnetic field generated by the coil is used in a productive way. This is achieved with the features of claim 1 using both sides of the energised core. Advantageous embodiments are shown in the dependent claims.

The Drawings:
Figure 1. Shows the standard electric motor, with the rotor (3) made up of "T" shaped segments (3) radiating from the center of the rotor, with the top of the "T" (2) forming the outer circumference of the rotor (3), only one side of the energized coil (5) is used to provide rotation of the rotor (3).
Figure 2. Shows the standard "Radial electric motor, with the "rotor" (3) being made up of "T" shaped segments (2) facing outwardly from the center of the rotor, with only one side of the energized coil (5) being used to provide rotation of the permanent magnets (6) in the stator (1).
Figure 3. Shows the plan view of a round dish "the rotor" (8) with permanent magnets (9) fitted near its circumference. In this drawing the rotor (8) rotates around a fixed shaft (4). A single "U" shaped core (11) and energizing coil (10) are fitted at the top.

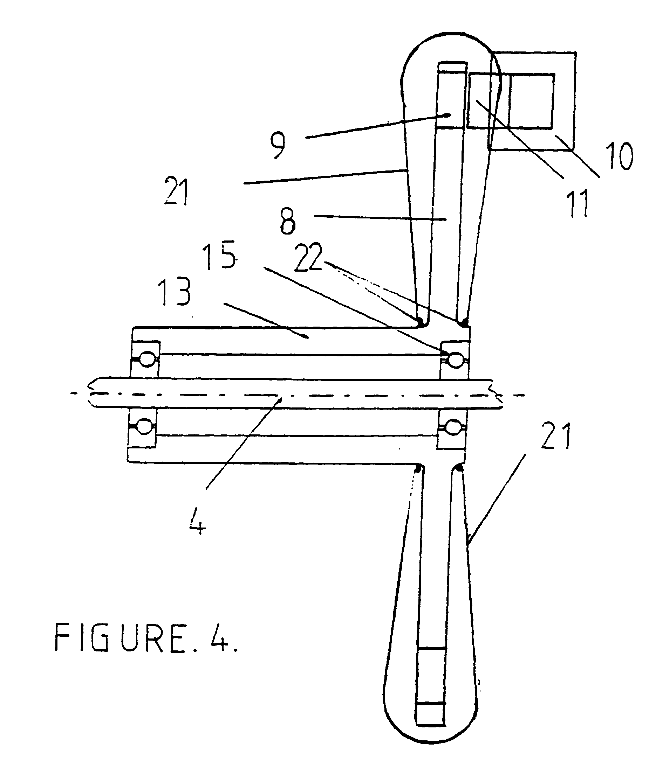

Figure 4. Shows the side view of figure 3, with a "U" shaped core (11) fitted with an energizing coil (10) fixed to the side of the stator (1) in line with the arc formed by the permanent magnets (9), and fitted with a dust cover (21).

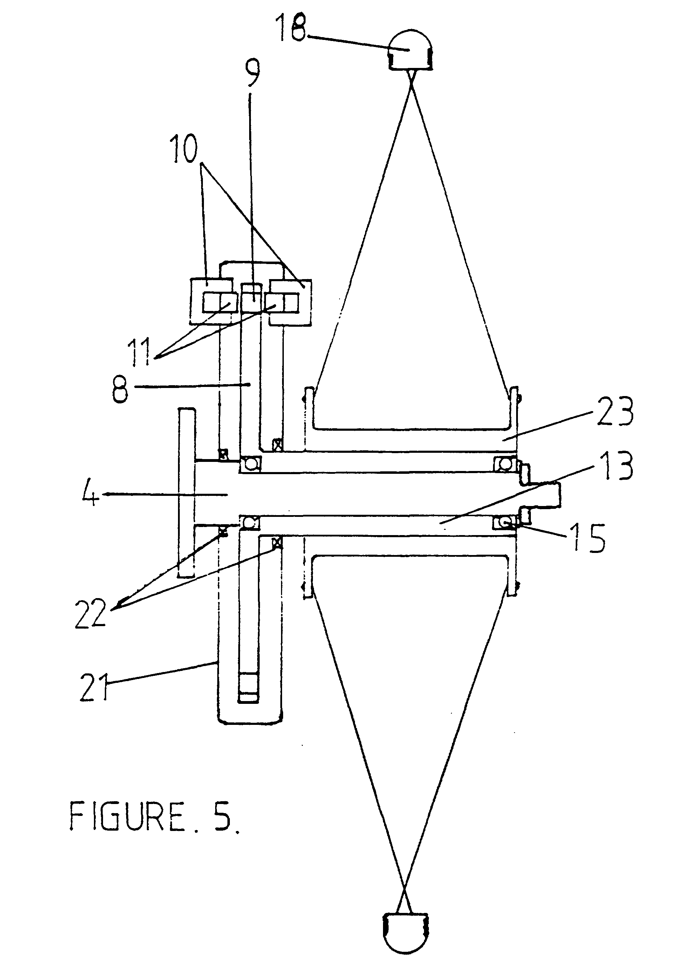

Figure 5. Shows the side view of the rotor (8) fitted with a wheel (18), and with two cores (11) fitted with energized coils (10) positioned either side of the top of the rotor (8).

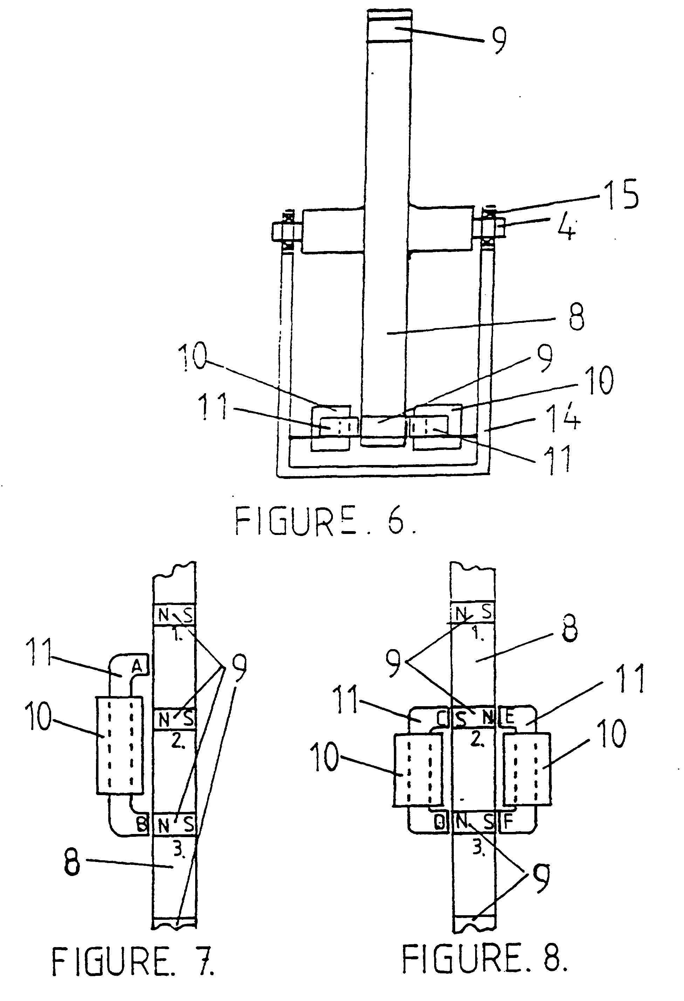

Figure 6. Shows the side view of the rotor (8), in the shaft holder stand (14) with the energised cores (11) and coils (10) fitted to the stator (1) and positioned both sides of the bottom of the rotor (8), in line with the permanent magnets (9) in the rotor (8)
Figure 7. Shows a section of the plan view of the rotor (8) with the "U" shaped core (11) and the energising coil (10) positioned one side of the rotor (8), and with all the North magnetic poles facing the same side of the rotor (8). The length between the ends of the core (11) is one and a half times the length between the permanent magnets (9) fitted in the rotor (8).
Figure 8. Shows a section of the plan view of the rotor (8) with the "U" shaped cores (11) and the energised coils (10) positioned both sides of the rotor (8), with alternative magnetic poles facing one side of the rotor (8), the ends of the energised core (11) line up with the permanent magnets (9) in the rotor (8).

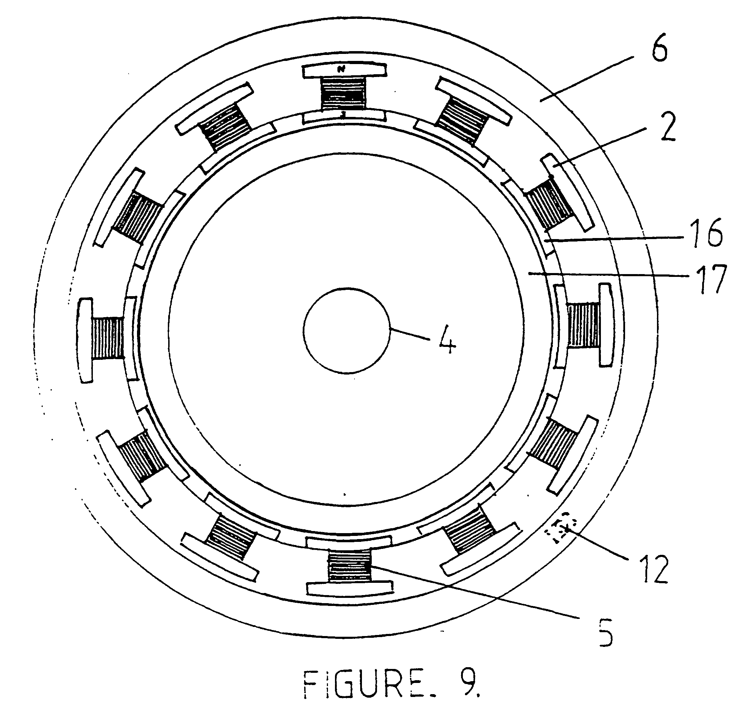

Figure 9. Shows the radial electric motor in figure 2. with both ends of the energised coils (5) used, the core (16) has a "H" shape not a "T" shape, with the energised coil (5) fitted to the center. There is a permanent magnet inner stator (17) fixed to the outer permanent magnet stator (6), so they rotate together.
Figure 10. Shows the rotor (8) fitted with permanent magnets (9), in the circumference of the rotor (8), with alternating magnetic poles facing outwards, and the stator (1) with coil windings (5) around the stator (1) to give two magnetic poles on the inner face of the stator (1), using both ends of the magnetic core (19).
Figure 11. Shows the rotor (8)fitted with permanent magnets (9), in the circumference of the rotor (8), with the same magnetic poles facing outwards, and the stator (1) with coil windings around the stator (1) to give two magnetic poles on the inner face of the stator (1), using both ends of the magnetic core (19).
Figure 12. Shows the side view application of the improved electric motor fitted to the front wheel of a bike, with the dust cover (21) fitted.
Figure 13. shows the front view application of the improved electric motor fitted to the front wheel of a bike, with the dust cover (21)fitted.

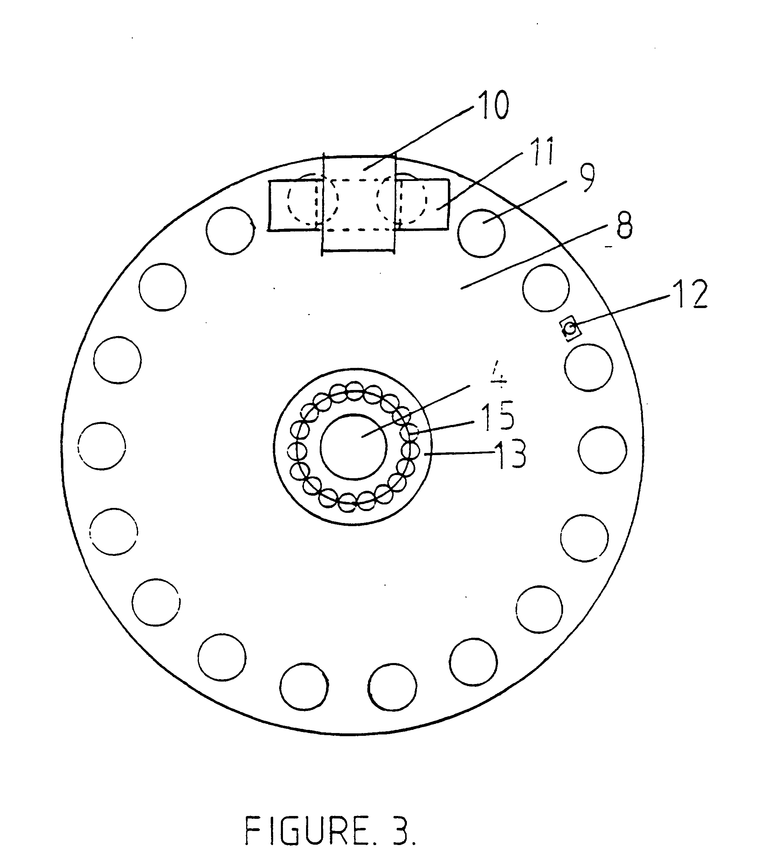

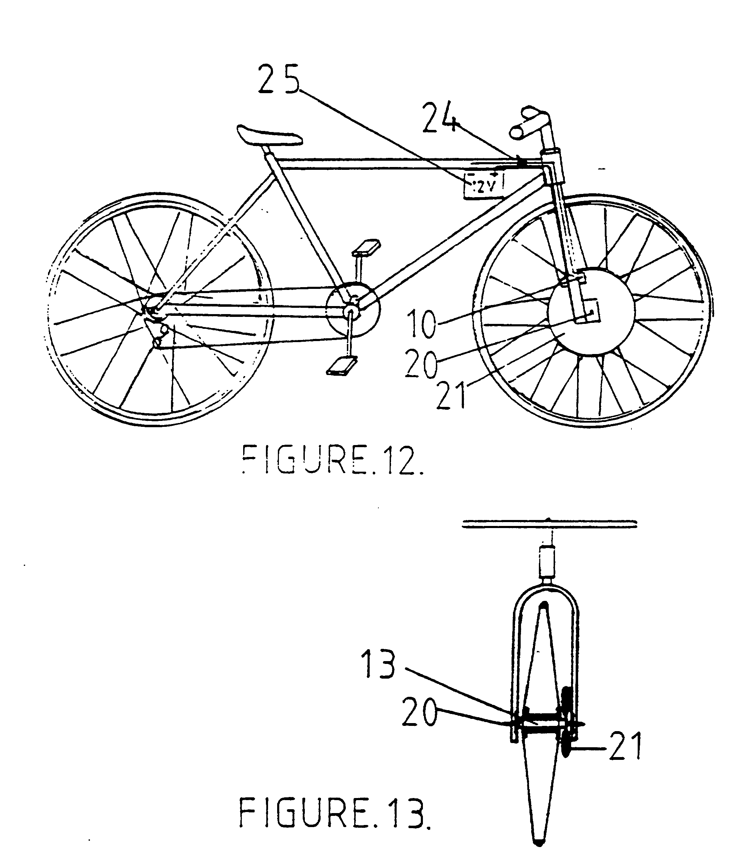

This " Improved Electric Motor " is intended to over come the deficiency of the standard electric motor, (figure. 1&2), which only uses the outside of the energised segment, (figure 1&2, no.2) of the rotor to attract or repell the magnets (figure 1&2, no.6) in the stator (figure 1&2, no.1). The rotor is made up of " T " shaped segments (figure 1&2, no.2) radiating from the center of the rotor(figure1&2, no.4), with the top of the " T " forming the outer circumference of the rotor. The " T " shaped segments have windings (figure1&2, no.5) ( usually copper wire ) wound around the stem (figure 1&2, no.3) of the " T " shaped segments which may be connected to a commutator (figure1&2, no.7) In a D.C. motor, but not necessarily in a A.C. or other types of electrical motors. Every time the electrical current is allowed to pass through the wound coil (figure1&2, no.5) the " T " shaped segment (figure1&2, no.2) becomes an electro magnet with a north and south magnetic pole. The top of the " T " shaped segment (figure1&2, no.2) is attracted or repelled by the magnets in the stator(figure1&2, no.6), but the lower stem of the " T " shaped segment (figure1&2, no.3) which is near the center of the rotor (figure1&2, no.4) is also magnetized, but is not used in any productive way to provide rotational power to the rotor. This invention addresses that problem and is an electric motor wnich uses both sides of the energised coil, to provide increased power and efficiency for the same amount of electrical energy used.
This Invention in its simplest simplest form consists of (fig.3) a Rotor (8) with a shaft (4) passing through the center of the Rotor (8), and at 90 degrees to the flat face of the Rotor (8). A spigot (13) may be attatched to the center of the Rotor (8) to act as a means of spreading the bearings (15), and controlling the side ways movement of the circumference of the Rotor (8). Near the circumference of the Rotor (8) and equal distance from the center of the Rotor (8), and equal distances apart are fixed permanent magnets (9) so that the north, south axis of the permanent magnets (9) are parallel to the shaft (4) passing through the Rotor (8). All the permanent magnets (9) are fixed so the north poles all face one side of the Rotor (8), and all the south poles face the other side of the Rotor (8). A horse shoe shaped electro magnet (11) is fitted to the stator (1) so the ends of the energised core (11) are in line with the arc formed by the permanent magnets(9) fitted in the rotor (8). The coil (10) on the electro magnet (11) is wound to suit the predetermined application of the electric motor. When an electric current is passed through the coil (10) the ends of the electro magnet (11), are magnetized to have a South and North magnetic pole, adjacent to each other. The center line of the permanent magnets (9) in the rotor (8) passes between the center line of the ends of the energised magnetic poles (11), with only an air gap clearance. A Hall effect electrical switch (12) system is fitted, which is activated by the permanent magnets (9) in the rotor (8) to change the direction of flow of the electrical current, and alternate the magnetic poles, at predetermined times, to induce a rotary motion of the rotor (8). Describing the effect on a single permanent magnet in the rotor (8). As the North pole of the permanent magnet (9) rotates towards the South pole of the electro magnet (11), Unlike magnetic poles attract, so the permanent magnet (9) is attracted to the North pole on the energized magnet (11). As it passes beneath the end of the energized pole (11), the switch (12) is activated and changes the direction of the electnc current, which in turn changes the South pole into a North pole, which repels the North pole on the permanent magnet (9), forcing the rotor to rotate, this process is repeated. Although this invention is shown with only one electro magnet (11), there could be as many electro magnets (11) as permanent magnets (9). provided they are positioned the same way as the set up required for the single electro magnet (11) in relation to the permanent magnet (9) in the rotor (8). The number of permanent magnets (9) could be one or more depending on design requirements, and the rotor (8) could be of a suitable magnetic properties material so that the magnetic poles could be permanently positioned in to the material, and not individual permanent magnets (9). Only one switching devise (12) is required regardless of the number of electro magnets (11) used to change the direction of the electrical current If the electro magnets (11) are wired in series the direction of the electric current, at any given time would be the same in all the coils (10) used. An electronic circuit with a Linear Hall effect sensor and low voltage amplifier, to activate the switching, is used to change the direction of the electrical current fitted to the magnetic core. If the permanent magnets (9) in the rotor (8) were positioned so that on one side of the rotor (8) the magnetic poles were, North, South, North, South, and continued to altemate, every pole being the opposite pole to the proceeding pole. Instead of using one end of a energised magnet (11). a " U " shaped magnet (11), with its own energizing coil (10) was fitted both sides of the rotor (8). The length between the centers of the permanent magnets (9) in the rotor (8), and the " U " shaped energized magnets (11) fitted to both sides of the rotor (8) is the same, both ends of the energized magnet (11) could be used to produce productive output.

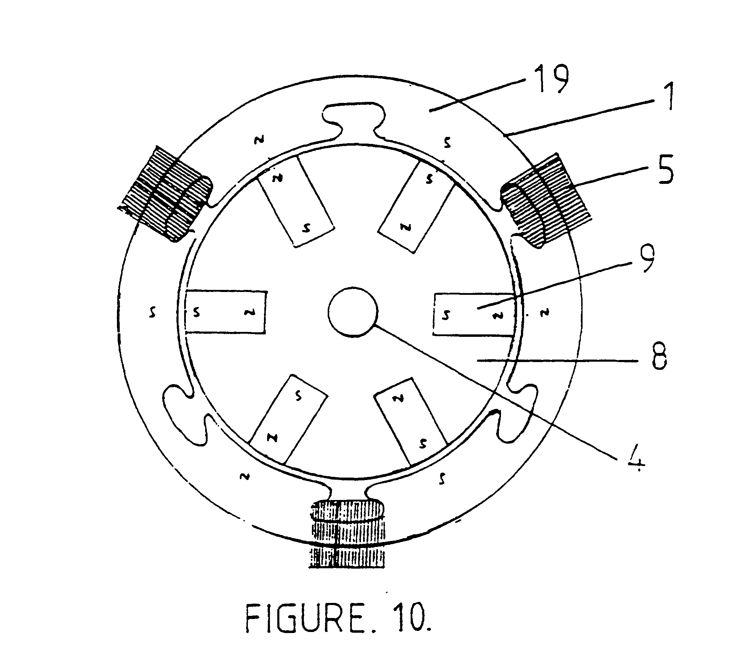

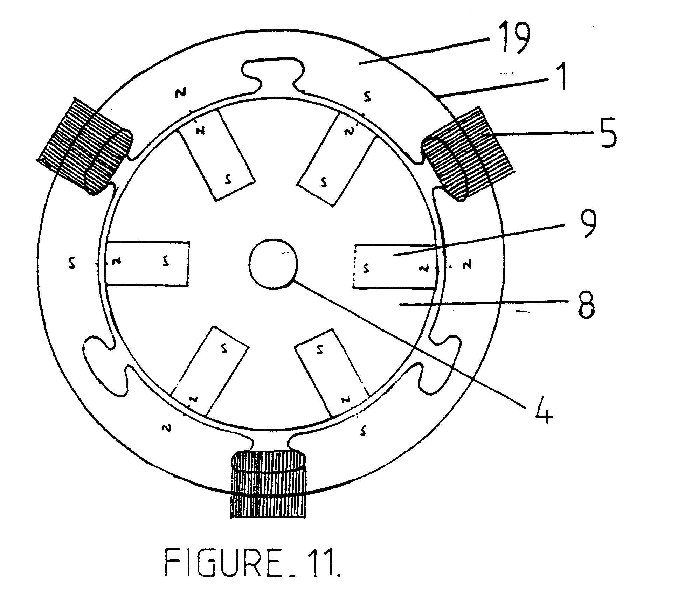

Figure 10 and 11 show various combinations of this invention. The main point being that by placing the energising coil (11) around the stator (1) circumference, and not the segments or "T" shapes formed in the stator (1), that not ony does this save in the amount of copper wire required for the windings, but produces the two magnetic poles for approximately half the current. It is also possible to put permanent magnets in the stator (1) and by joining the illustrated permanent magnets (9) which would give three "U" shaped cores (11), and positioning an energising coil (10) around the center, then connecting the energised coil (11) to a commutator or electronic switching system (12), would give more examples of configurations which could use this invention.
One of the uses of this new electric motor is to fit a bicycle wheel (fig12,13) on to the spigot (13), attached to the rotor (8). The most suitable wheel would be the front wheel (fig12, 13), as this would leave the chain drive intact on the back wheel, so the rider could pedal normally, or turn on the electric power to the electric motor in the front wheel and stop pedalling. The electric motor would propell the cycle in a forward direction. The amount of power, and therefore the speed of the cycle would be controlled by the switch (24) fitted to the cycle cross bar, or could be fitted to the handle bar. The electric motor would need to be fitted with a dust cover (21) and dust seals (22) to prevent metal and dust particles from being attracted to the permanent magnets, and restricting the air gap between the energised magnets (11) and permanent magnets (9). Suitable electronics could be used to have the electric motor act as a generator and recharge the battery when the electric motor was not being used, and the bicycle was being used with pedal power, or going down a hill. It would be obvious that the motor described in this specification could be used as a stationary electric engine with the shaft fixed to the Rotor and the bearings fitted to the outside casing (21) or to a stand (14), with the shaft (4) rotating and providing a power output Modifications are possible within the scope of the appended claims.

## Claims

1. An AC or DC electric motor having a rotor and a stator (6, 17), energised coils (5) positioned circumferentially around the rotor, permanent magnets in the stator (6, 17), and a switching device (12) to change the direction of electrical current through the energised coils (5), wherein the stator (6, 17) comprises a permanent_magnet inner stator (17) and a permanent magnet outer stator (6) fixed to the inner stator (17), the rotor with the energised coils (5) operating between the inner stator (17) and the outer stator (6), **characterised in that** each coil (5) is wound on an H shaped core (16) and that the H shaped core (16) has a radial stem and magnetic pole pieces (2) at each end of the stem, with the energised coil (5) fitted to the center of the H shaped core (16) and the pole pieces (2) being radially positioned forming the circumference of the rotor whereby both sides of the energised coil (5) are used to be attracted or repelled by the magnets of the inner stator (17) and the outer stator (6).

2. An AC or DC electric motor as defined in claim 1 wherein the switching device (12) comprises a Hall effect switch.

3. An AC or DC electric motor as defined in claim 1 wherein the permanent magnet inner stator (17) and the permanent magnet outer stator (6) rotate together, the energised coils (5) being preferably fixed.

4. An AC or DC electric motor as defined in claim 1 wherein the number of permanent magnets is more than one.

## Patentansprüche

1. Elektrischer AC- oder DC Motor mit einem Rotor und einem Stator (6, 17), um den Umfang des Rotors angeordneten stromführenden Spulen (5), Permanentmagneten in dem Stator (6, 17) und einer Schaltvorrichtung (12) zum Wechseln der Richtung des durch die stromführenden Spulen (5) fließenden Stromes, wobei der Stator (6, 17) einen permanentmagnetischen inneren Stator (17) und einen permanentmagnetischen äußeren Stator (6) aufweist, welcher an dem inneren Stator (17) festgelegt ist, wobei der Rotor mit den stromführenden Spulen (5) zwischen dem inneren Stator (17) und dem äußeren Stator (6) arbeitet, **dadurch gekennzeichnet, dass** jede Spule (5) auf einen H-förmigen Kern (16) gewickelt ist und dass der H-förmige Kern (16) einen radialen Steg und magnetische Polplatten (2) an jedem Ende des Steges aufweist, wobei die stromführende Spule (5) im Zentrum des H-förmigen Kerns (16) angebracht ist und die Polplatten (2) radial zum Formen des Umfangs des Rotors angeordnet sind, wobei beide Seiten der stromführenden Spule (5) verwendet werden, um durch die Magnete des inneren Stators (17) und des äußeren Stators (6) angezogen oder abgestoßen zu werden.

2. Elektrischer AC- oder DC Motor gemäß Anspruch 1, wobei die Schaltvorrichtung (12) einen Hall-Effekt Schalter aufweist.

3. Elektrischer AC- oder DC Motor gemäß Anspruch 1, wobei der permanentmagnetische innere Stator (17) und der permanentmagnetische äußere Stator (6) zusammen rotieren, wobei die stromführenden Spulen (5) vorzugsweise fixiert sind.

4. Elektrischer AC- oder DC Motor gemäß Anspruch 1, wobei die Anzahl der Permanentmagneten mehr als eins ist.

## Revendications

1. Moteur électrique à courant alternatif ou à courant continu, avec un rotor et un stator (6, 17), des bobines excitées (5) positionnées autour du rotor sur sa circonférence, des aimants permanents dans le stator (6, 17) et un dispositif de commutation (12) pour changer la direction du courant électrique à travers les bobines excitées (5), le stator (6, 17) comprenant un stator intérieur (17) à aimants permanents et un stator extérieur (6) à aimants permanents fixé au stator intérieur (17), le rotor avec les bobines excitées (5) opérant entre le stator intérieur (17) et le stator extérieur (6), **caractérisé en ce que** chaque bobine (5) est enroulée sur un noyau (16) en forme de H et **en ce que** le noyau en forme de H (16) a une tige radiale et des pièces formant le pôle magnétique (2) à chaque extrémité de la tige, la bobine excitée (5) étant positionnée au centre du noyau en forme de H (16), les pièces de pôle (2) étant positionnées de façon radiale en formant la circonférence du rotor, les deux côtés de la bobine excitée (5) étant utilisés pour être attirés ou repoussés par les aimants du stator intérieur (17) et du stator extérieur (6).

2. Moteur électrique à courant alternatif ou à courant continu selon la revendication 1, dans lequel le dispositif de commutation (12) comprend un interrupteur à effet Hall.

3. Moteur électrique à courant alternatif ou à courant continu selon la revendication 1, dans lequel le stator intérieur à aimants permanents et le stator extérieur à aimants permanents tournent tous les deux, les bobines excitées (5) étant de préférence fixes.

4. Moteur électrique à courant alternatif ou à courant continu selon la revendication 1, dans lequel le nombre d'aimants permanents est supérieur à 1.
